# EUROPEAN PATENT APPLICATION

(11) **EP 4 686 436 A1**
(43) Date of publication of application: **04.02.2026**
(21) Application number: 24191824.2
(22) Date of filing: 30.07.2024
(51) Int. Cl.: A47J 27/14, A47J 27/00, A47J 27/56, A47J 27/62, A47J 36/06, A47J 36/32

(54) **A MULTIFUNCTIONAL STATIONARY BOILING PAN**

(71) Applicant: Log-iQ s.r.o., 71900 Ostrava (CZ)
(72) Inventor: Chromek, Michal, 73532 Rychvald (CZ); Valek, Jiri, 70800 Ostrava (CZ)
(74) Representative: Kendereski, Dusan

(57) **Abstract**

The present invention relates to a multifunctional stationary boiling pan (1), comprising: a cooking vessel (2) defined by a bottom (3) and side walls (4); a waste outlet (5); a food outlet (6); a lid (7) for enclosing the cooking vessel (2); a heating element (8) for heating the cooking vessel (2); a main power supply (9); and a control unit (11). The lid (7) for enclosing the cooking vessel (2) is hinged between an open position and a closed position and a handle (71) is attached to the lid (7) for manually adjusting the position of the lid (7). The lid (7) comprises a lid position sensor (72) coupled to the control unit (11) configured to detect the closed position of the lid (7) and to subsequently decrease the temperature of the heating element (8). The present invention further relates to a method for controlling heating by the multifunctional stationary boiling pan (1), and to a corresponding computer program [product], a computer-readable medium and a carrier signal.

## Description

### Field of technology

The present invention relates to a multifunctional stationary boiling pan with a temperature control function for a heating element.

### Background of the invention

In prior art, multifunctional stationary boiling pans are known, comprising: a boiling vessel defined by a bottom and side walls; a waste outlet; a food outlet; a lid for enclosing the boiling vessel; a heating element for heating the boiling vessel; and a control unit.

When preparing a dish, it may happen that an ingredient is exposed to too high a temperature (e.g. burning oil, foaming milk, etc.). In such a critical situation, it is necessary to decrease the temperature quickly to prevent the food from spoiling and ideally to cover the food with a lid to prevent the food from escaping from the cooking vessel (e.g. hot oil splashing out, milk foaming out, etc.). Well-known multifunctional stationary boiling pans usually have manual temperature control, where a few clicks on a keypad or graphical user interface are required to decrease the temperature. The disadvantage of manual control is the lack of a fast reaction time to perform the set of necessary actions to lower the temperature.

"Multifunctional stationary boiling pan" means a heatable cooking vessel which cannot be unloaded by tilting, typically used in catering, e.g. with the function of a frying pan, duplicator boiling pan, fryer, grill, sous-vide boiling pan, with a cooking temperature range of 30 to 250 °C.

"Ingredient" means any substance for preparing a dish (e.g. water, fat, milk, dry ingredients, meat, dairy products, vegetables, fruit, etc.). "Food" means at least one ingredient heat-treated by a multifunctional stationary boiling pan.

Thus, in the prior art, there is a need for, and the object of the invention is to provide a multifunctional stationary boiling pan meeting high hygienic and safety working standards.

### Summary of the invention

The object of the invention is achieved by a multifunctional stationary boiling pan according to claim 1, comprising: a cooking vessel defined by a bottom and side walls; a waste outlet; a food outlet; a lid for enclosing the cooking vessel; a heating element for heating the cooking vessel; a main power supply; and a control unit.

The underlying idea of the multifunctional stationary boiling pan according to the present invention is that the lid for enclosing the cooking vessel is hinged between an open position and a closed position and a handle is attached to the lid for manually adjusting the lid position. The lid comprises a lid position sensor coupled to the control unit configured to detect the closed position of the lid and to subsequently decrease the temperature of the heating element. The advantages of temperature control by lid position are that the operator does not have to click on a touch screen, stop the cooking program or change the temperature already set on the display, thus saving unnecessary clicks, especially in emergency situations requiring a quick response (e.g., overheating oil, foaming milk, etc.). The advantage of the handle is that the lid can be closed quickly compared to semi-automatic closure (e.g. by continuously holding a button). With these advantages, high hygiene and safety standards can be met (protection of food from foreign objects, safe and dry area next to the boiler).

In a preferred embodiment, the control unit is further configured to detect the open position of the lid and to subsequently increase the temperature of the heating element to a value prior to decreasing, allowing the cooking program to be quickly resumed.

In a preferred embodiment, the waste outlet comprises an electromechanical drain valve controlled by a servomotor. The servomotor is coupled to the control unit configured to detect and adjust the position of the drain valve between an open position and a closed position. Thus, the control unit regulates the position of the drain valve based on preprogrammed rules ensuring hygienic and safe working standards. This prevents accidental manual opening or closing of the drain valve. The drain valve is coupled to a backup power supply (e.g. arranged in the servomotor) so that when the main power supply is switched off or disconnected, the drain valve does not remain in the open position but closes automatically.

In a preferred embodiment, the multifunctional stationary boiling pan further comprises a temperature sensor for measuring the temperature of a food ingredient.

In a preferred embodiment, the waste outlet is arranged in the side wall, not in the bottom, thus achieving a better distribution of heating elements in the bottom of the boiling pan and more even heating.

In a preferred embodiment, that the upper surface of the side walls comprises an outer circumferential protrusion and an inner circumferential recess, wherein the lid can rest on the inner circumferential recess and the inner circumferential recess comprises an additional waste outlet. This will allow condensed cooking steam to drain to the sewer, prevent the lid from inadvertently rising when the steam concentration is high during cooking, and provide a hermetically sealed lid with no openings.

In a preferred embodiment, the waste outlet and the additional waste outlet are connected to a common waste outlet that can be connected to the sewer. Any of said waste outlets may be blocked by a blocking element to prevent backflow of waste water in the event of a sewer failure.

In a preferred embodiment, the additional waste outlet or the common waste outlet comprises a vent outlet to ensure draining of non-condensed steam. The vent outlet may be provided with a screen to prevent insects from entering the waste outlet and the cooking vessel.

In a preferred embodiment, the depth of the inner circumferential recess is 5 to 15 mm, preferably 8 to 12 mm (e.g. 10 mm) and the diameter of the opening of the additional waste outlet may be 20 to 30 mm (e.g. 25 mm).

Another aspect of the present invention is a method for controlling heating by the multifunctional stationary boiling pan having a control unit, a hinged lid and a lid position sensor, comprising the steps of:
a. inserting at least one ingredient into the cooking vessel and setting the cooking program in the control unit;
b. starting the cooking program by the control unit and switching on the heating element;
c. lowering the lid to the closed position and detecting the closed position by the lid position sensor;
d. receiving a signal about the closed lid position from the lid position sensor to the control unit; and
e. sending a signal by the control unit to the heating element to decrease the temperature of the heating element.

If the temperature of the heating element before the lid is lowered is higher than 97 °C and a cooking program is set to prepare food, e.g. by boiling, gentle cooking or cooking of dairy products (i.e. a cooking program generally consisting in reaching a boiling point of 100 °C), the control unit sends a signal to the heating element to decrease the temperature to 97 °C, thereby preventing the boiling point of 100 °C (of water, milk, etc.). In this case, if the temperature of the heating element is less than or equal to 97 °C before the lid is lowered, no further decreasing of the temperature of the heating element occurs when the lid is lowered.

If the temperature of the heating element before the lid is lowered is higher than 150 °C and a cooking program is set to prepare food, e.g. by frying, deep-frying or grilling (i.e. a cooking program generally consisting in reaching a temperature of properly heated fat, higher than 150 °C), the control unit sends a signal to the heating element to decrease the temperature to 150 °C, thereby preventing the fat (oil, etc.) from reaching the temperature of overheating. In this case, if the temperature of the heating element is less than or equal to 150 °C before the lid is lowered, the temperature of the heating element will not be decreased further when the lid is lowered.

In a preferred embodiment, the method for controlling heating further comprises the following steps:
f. raising the lid to the open position and detecting the open position by the lid position sensor;
g. receiving a signal about the open lid position from the lid position sensor to the control unit; and
h. sending a signal by the control unit to the heating element to increase the temperature of the heating element to the temperature before the decrease in step d.

Another aspect of the present invention is a method for preparing food by the multifunctional stationary boiling pan having a control unit, an electromechanical drain valve controlled by a servomotor, and a temperature sensor, comprising the steps of:
a. inserting at least one ingredient into the cooking vessel and setting a cooking program in the control unit;
b. starting the cooking program by the control unit and switching on the heating element;
c. sending a signal by the control unit to the servomotor and locking the drain valve in the closed position for the duration of food preparation; and
d. optionally, measuring the temperature of the ingredient with the temperature sensor, wherein if the temperature of the ingredient exceeds 105 °C (e.g. hot oil), blocking the drain valve in the closed position after the cooking program has finished (hot oil is not to be discharged into the sewer for safety reasons).

The control unit, and therefore the cooking program settings, can be controlled via a graphical user interface, e.g. a touch screen or a display in combination with a keypad or a set of buttons.

When any cooking program is selected and then cooking is started, the drain valve closes automatically. If for some reason the valve does not lock in the closed position in step c. (e.g. due to food from a previous cooking program getting stuck in the valve), the control unit will send an error message (e.g. by displaying on the display), will not allow the cooking program to start and will switch off the heating element so that no further food preparation is discharged into the drain.

In a preferred embodiment of the method for preparing food, after the power supply to the multifunctional stationary boiling pan is switched off from the main power supply (e.g. by 24 V DC), the drain valve is powered by the backup power supply and locked in the closed position.

Another aspect of the present invention is a computer program [product] comprising instructions that cause the control unit to perform the steps b., d. and e., optionally further comprising steps g. and h., of the method for controlling heating and/or steps b. to d. of the method for cooking food.

Another aspect of the present invention is a computer readable medium on which the computer program [product] is stored, or a signal carrier carrying the computer program [product].

### Description of the drawings

Figure 1 shows a perspective view of a multifunctional stationary boiling pan with an additional waste outlet in the inner circumferential recess.
Figure 2 shows a side sectional view of a multifunctional stationary boiling pan with an additional waste outlet, a common waste outlet and a vent outlet.
Figure 3 shows a perspective view of a multifunctional stationary boiling pan with a waste outlet containing a drain valve.
Figure 4 shows a block diagram of the drain valve connection.
Figure 5 shows a perspective view of a multifunctional stationary boiling pan with a hinged lid and handle.
Figure 6 shows a block diagram of the lid position sensor connection.

### Examples

### Example 1

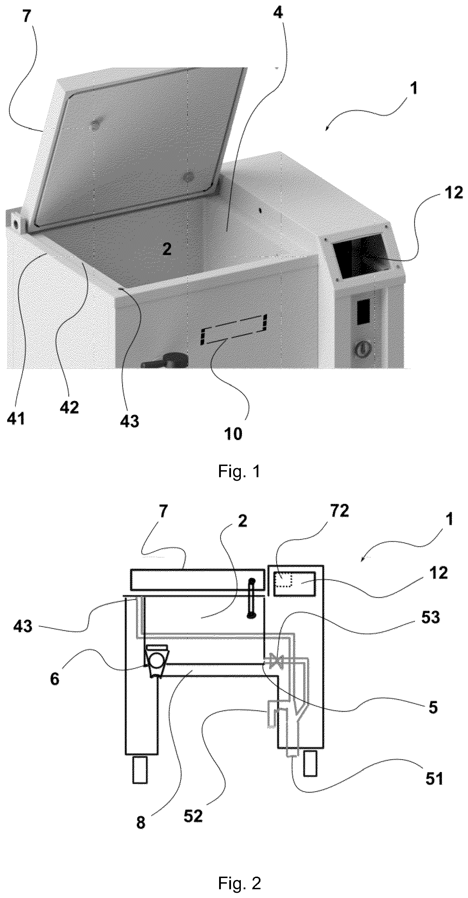

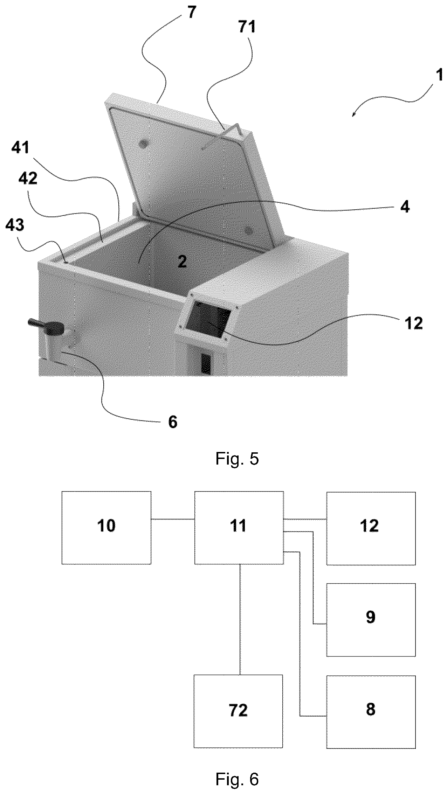

Figures 5 and 6 show a multifunctional stationary boiling pan 1 further comprising a control unit 11, a hinged lid 7 for enclosing the cooking vessel 2 between an open position and a closed position, and a handle 71 attached to the lid 7 for manually adjusting the position of the lid 7. The lid 7 further comprises a lid position sensor 72 (Figure 2) coupled to the control unit 11 configured to detect the closed position of the lid 7 and to subsequently decrease the temperature of the heating element 8, and further configured to detect the open position of the lid 7 and to subsequently increase the temperature of the heating element 8 to a value prior to decreasing. The lid position sensor 72 may be an electromechanical terminal switch with a step switching member, such as a Schneider terminal switch type XCKN2149P20.

In a first step, at least one ingredient is inserted in the cooking vessel 2 and the cooking program is set on the touch screen 12 in the control unit 11 (time, temperature, type of heat treatment - cooking, roasting, frying, grilling, sous-vide cooking, etc.). In a second step, the control unit 11 uses a computer program to start the food cooking program (i.e. sets the temperature of the heating element 8 and starts time monitoring) and turns on the heating element 8. In a third step, if the temperature of the heating element 8 is higher than 97 °C (which can be detected by the temperature sensor 10) and the cooking program is set to prepare food, e.g. by boiling, gentle cooking or cooking of dairy products, or if the temperature of the heating element 8 is higher than 150 °C (which can be detected by the temperature sensor 10) and a cooking program is set to prepare food, e.g. by frying, deep frying or grilling, the lid 7 is then lowered to the closed position, which is detected by the lid position sensor 72. In a fourth step, the control unit 11 receives a signal about the closed position of the lid 7 from the lid position sensor 72 by means of a computer program. Then, in a fifth step, the control unit 11 sends a signal by means of the computer program to the heating element 8 to decrease the temperature of the heating element 8 to 97 °C or 150 °C, respectively, without the need for manual input of a change in the cooking program.

Optionally, in a sixth step, the lid 7 is raised to the open position, which is detected by the lid position sensor 72. In a seventh step, the control unit 11 receives, by means of a computer program, a signal about the open position of the lid 7 from the lid position sensor 72. Subsequently, in an eighth step, the computer program control unit 11 sends a signal by means of the computer program to the heating element 8 to increase the temperature of the heating element 8 to the temperature prior to decreasing in the fourth step, i.e. to an initial temperature greater than 97 °C or greater than 150 °C, without the need to reenter or change the food cooking program.

### Example 2

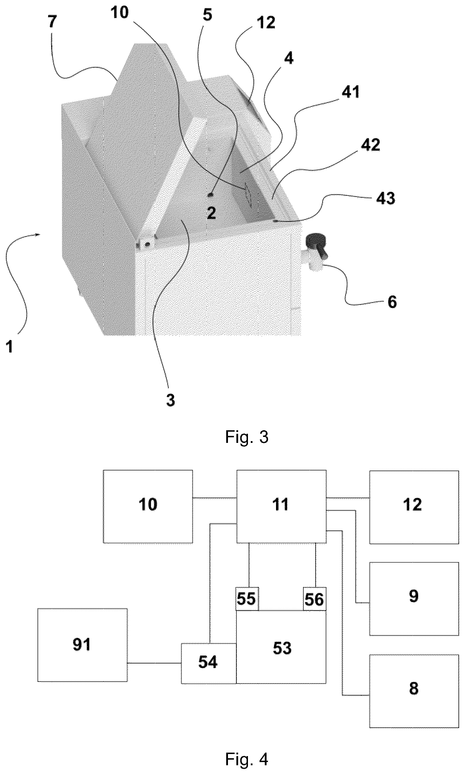

In accordance with Example 1, Figures 3 and 4 show a multifunctional stationary boiling pan 1 further comprising a control unit 11, and optionally a temperature sensor 10 (e.g. within one of the side walls 4), wherein the waste outlet 5 comprises an electromechanical drain valve 53 controlled by a servomotor 54. The servomotor 54 is coupled to the control unit 11 for detecting and adjusting the position of the drain valve 53 between an open position and a closed position. Detection is accomplished by means of two switches 55, 56 connected to the control unit 11, wherein actuation of the first switch 55 indicates the open position and actuation of the second switch 56 indicates the closed position. A control shaft of the drain valve 53 extends from the control unit 11 and is connected to the servomotor 54 and to a cam for switching the individual switches 55, 56. The drain valve 53, or the servomotor 54, is connected to a backup power supply 91. The control unit 11 is connected to a graphical user interface in the form of a touch screen 12.

In a first step, at least one ingredient is inserted in the cooking vessel 2 and a cooking program is set on the touch screen 12 in the control unit 11 (time, temperature, type of heat treatment - cooking, roasting, frying, grilling, sous-vide cooking, etc.). In a second step, the control unit 11 starts the food cooking program (i.e., sets the temperature of the heating element 8 and starts the time monitoring) using the computer program and turns on the heating element 8. In a third step, the computer program is then used by the control unit 11 to send a signal to the servomotor 54 to lock the drain valve 53 in the closed position for the duration of the food preparation. If for some reason the drain valve 53 does not lock in the closed position (e.g. due to food from a previous cooking program being stuck in the drain valve 53), the control unit 11 sends an error message (e.g. by displaying on the touch screen 12), does not allow the cooking program to start and switches off the heating element 8.

Optionally, in a fourth step, the temperature of the ingredient is measured by the temperature sensor 10, wherein if the temperature of the ingredient exceeds 105 °C (e.g. hot oil), the drain valve 53 is locked in the closed position by the computer program even after the food preparation is finished. Unblocking is achieved by measuring the temperature of the ingredient (hot oil) dropping below 105 °C by the temperature sensor 10 and then unblocking the drain valve 53 by the control unit 11 using the computer program. Optionally, unblocking is additionally achieved by user input to the control unit 11 by confirming that the ingredient (hot oil) has been removed from the cooking vessel 2 (e.g. using a scraper and through the food outlet 6).

### Example 3

In accordance with Example 1 or 2, Figure 1 shows a multifunctional stationary boiling pan 1 comprising: a cooking vessel 2 defined by a bottom 3 and side walls 4; a waste outlet 5; a food outlet 6; a lid 7 for enclosing the cooking vessel 2; a heating element 8 for heating the cooking vessel 2; and a main power supply 9. The upper surface of the side walls 4 comprises an outer circumferential protrusion 41 and an inner circumferential recess 42 (e.g. 10 mm deep). The lid 7 can rest on the inner circumferential recess 42, and an additional waste outlet 43 (e.g. with a 25 mm diameter opening) is provided in the inner circumferential recess 42. Figure 2 shows the waste outlet 5 and the additional waste outlet 43 connected to a common waste outlet 51, which includes a vent outlet 52 fitted with a screen and which is connectable to the sewer (e.g. by an inner diameter pipe with a nominal clearance of DN 50).

### Industrial applicability

The multifunctional stationary boiling pan described herein can be used in the catering industry.

### List of reference signs

- 1: boiling pan
- 2: cooking vessel
- 3: bottom
- 4: side wall
- 5: waste outlet
- 6: food outlet
- 7: lid
- 8: heating element
- 9: main power supply
- 10: temperature sensor
- 11: control unit
- 12: touch screen
- 41: outer circumferential protrusion
- 42: inner circumferential recess
- 43: additional waste outlet
- 51: common waste outlet
- 52: vent outlet
- 53: drain valve
- 54: servomotor
- 55: first switch
- 56: second switch
- 71: handle
- 72: lid position sensor
- 91: backup power supply

## Claims

1. A multifunctional stationary boiling pan (1), comprising: a cooking vessel (2) defined by a bottom (3) and side walls (4); a waste outlet (5); a food outlet (6); a lid (7) for enclosing the cooking vessel (2); a heating element (8) for heating the cooking vessel (2); a main power supply (9); and a control unit (11); **characterised in that** the lid (7) for enclosing the cooking vessel (2) is hinged between an open position and a closed position and a handle (71) is attached to the lid (7) for manually adjusting the position of the lid (7), wherein the lid (7) comprises a lid position sensor (72) coupled to the control unit (11) configured to detect the closed position of the lid (7) and to subsequently decrease the temperature of the heating element (8).

2. The multifunctional stationary boiling pan (1) according to claim 1, **characterised in that** the control unit (11) is further configured to detect the open position of the lid (7) and to subsequently increase the temperature of the heating element (8) to a value prior to decreasing.

3. The multifunctional stationary boiling pan (1) according to claim 1 or 2, **characterised in that** the waste outlet (5) comprises an electromechanical drain valve (53) controlled by a servomotor (54), wherein the servomotor (54) is coupled to the control unit (11) configured to detect and adjust the position of the drain valve (53) between an open position and a closed position, wherein the drain valve (53) is coupled to a backup power source (91).

4. The multifunctional stationary boiling pan (1) according to any one of the preceding claims, **characterised in that** it further comprises a temperature sensor (10) for measuring the temperature of a food ingredient.

5. The multifunctional stationary boiling pan (1) according to any one of the preceding claims, **characterised in that** the waste outlet (5) is arranged in the side wall (4).

6. The multifunctional stationary boiling pan (1) according to any one of the preceding claims, **characterised in that** the upper surface of the side walls (4) comprises an outer circumferential protrusion (41) and an inner circumferential recess (42), wherein the lid (7) can rest on the inner circumferential recess (42), wherein the inner circumferential recess (42) comprises an additional waste outlet (43).

7. The multifunctional stationary boiling pan (1) according to claim 6, **characterised in that** the waste outlet (5) and the additional waste outlet (43) are connected to a common waste outlet (51).

8. The multifunctional stationary boiling pan (1) according to claim 6 or 7, **characterised in that** the additional waste outlet (43) or the common waste outlet (51) comprises a vent outlet (52).

9. The multifunctional stationary boiling pan (1) according to any one of claims 6 to 8, **characterised in that** the depth of the inner circumferential recess (42) is 5 to 15 mm, preferably 8 to 12 mm.

10. A method for controlling heating by the multifunctional stationary boiling pan (1) according to any one of the preceding claims, **characterised in that** it comprises the steps of:
a. inserting at least one ingredient into the cooking vessel (2) and setting a cooking program in the control unit (11);
b. starting the cooking program by the control unit (11) and switching on the heating element (8);
c. lowering the lid (7) to the closed position and detecting the closed position by the lid position sensor (72);
d. receiving a signal about the closed lid position from the lid position sensor (72) to the control unit (11); and
e. sending a signal by the control unit (11) to the heating element (8) to decrease the temperature of the heating element (8).

11. The method according to claim 10, **characterised in that** it further comprises the steps of:
f. raising the lid (7) to the open position and detecting the open position by the lid position sensor (72);
g. receiving a signal about the open lid position from the lid position sensor (72) to the control unit (11); and
h. sending a signal by the control unit (11) to the heating element (8) to increase the temperature of the heating element (8) to the temperature before the decrease in step d.

12. A computer program [product] comprising instructions that cause the control unit (11) of the multifunctional stationary boiling pan (1) according to any one of the preceding claims to perform the steps b., d. and e. of the method according to claim 10, optionally to further perform the steps g. and h., of the method according to claim 11.

13. A computer readable medium on which the computer program [product] according to claim 12 is stored, or a carrier signal carrying the computer program [product] according to claim 12.

## Amended claims

### Amended claims in accordance with Rule 137(2) EPC.

1. A multifunctional stationary boiling pan (1), comprising: a cooking vessel (2) defined by a bottom (3) and side walls (4); a waste outlet (5); a food outlet (6); a lid (7) for enclosing the cooking vessel (2); a heating element (8) for heating the cooking vessel (2); a main power supply (9); and a control unit (11); wherein a handle (71) is attached to the lid (7) for manually adjusting the position of the lid (7), wherein the lid (7) comprises a lid position sensor (72) coupled to the control unit (11), **characterised in that** the lid (7) for enclosing the cooking vessel (2) is hinged between an open position and a closed position, wherein the control unit (11) is configured to decrease the temperature of the heating element (8) in response to detecting the closed position of the lid (7).

2. The multifunctional stationary boiling pan (1) according to claim 1, **characterised in that** the control unit (11) is further configured to detect the open position of the lid (7) and to subsequently increase the temperature of the heating element (8) to a value prior to decreasing.

3. The multifunctional stationary boiling pan (1) according to claim 1 or 2, **characterised in that** the waste outlet (5) comprises an electromechanical drain valve (53) controlled by a servomotor (54), wherein the servomotor (54) is coupled to the control unit (11) configured to detect and adjust the position of the drain valve (53) between an open position and a closed position, wherein the drain valve (53) is coupled to a backup power source (91).

4. The multifunctional stationary boiling pan (1) according to any one of the preceding claims, **characterised in that** it further comprises a temperature sensor (10) for measuring the temperature of a food ingredient.

5. The multifunctional stationary boiling pan (1) according to any one of the preceding claims, **characterised in that** the waste outlet (5) is arranged in the side wall (4).

6. The multifunctional stationary boiling pan (1) according to any one of the preceding claims, **characterised in that** the upper surface of the side walls (4) comprises an outer circumferential protrusion (41) and an inner circumferential recess (42), wherein the lid (7) can rest on the inner circumferential recess (42), wherein the inner circumferential recess (42) comprises an additional waste outlet (43).

7. The multifunctional stationary boiling pan (1) according to claim 6, **characterised in that** the waste outlet (5) and the additional waste outlet (43) are connected to a common waste outlet (51).

8. The multifunctional stationary boiling pan (1) according to claim 6 or 7, **characterised in that** the additional waste outlet (43) or the common waste outlet (51) comprises a vent outlet (52).

9. The multifunctional stationary boiling pan (1) according to any one of claims 6 to 8, **characterised in that** the depth of the inner circumferential recess (42) is 5 to 15 mm, preferably 8 to 12 mm.

10. A method for controlling heating by the multifunctional stationary boiling pan (1) according to any one of the preceding claims, comprising the steps of:
a. inserting at least one ingredient into the cooking vessel (2) and setting a cooking program in the control unit (11); and
b. starting the cooking program by the control unit (11) and switching on the heating element (8);
**characterised in that** it comprises the steps of:
c. lowering the lid (7) to the closed position and detecting the closed position by the lid position sensor (72);
d. receiving a signal about the closed lid position from the lid position sensor (72) to the control unit (11); and
e. sending a signal by the control unit (11) to the heating element (8) to decrease the temperature of the heating element (8) in response to detecting the closed position of the lid (7).

11. The method according to claim 10, **characterised in that** it further comprises the steps of:
f. raising the lid (7) to the open position and detecting the open position by the lid position sensor (72);
g. receiving a signal about the open lid position from the lid position sensor (72) to the control unit (11); and
h. sending a signal by the control unit (11) to the heating element (8) to increase the temperature of the heating element (8) to the temperature before the decrease in step d.

12. A computer program [product] comprising instructions that cause the control unit (11) of the multifunctional stationary boiling pan (1) according to any one of claims 1 to 9 to perform the steps b., d. and e. of the method according to claim 10, optionally to further perform the steps g. and h., of the method according to claim 11.

13. A computer readable medium on which the computer program [product] according to claim 12 is stored, or a carrier signal carrying the computer program [product] according to claim 12.
